# EUROPEAN PATENT SPECIFICATION

(11) **EP 2 297 487 B1**
(45) Date of publication and mention of the grant of the patent: **29.02.2012**
(21) Application number: 09750261.1
(22) Date of filing: 22.05.2009
(51) Int. Cl.: F16H 59/04

(54) **A LEVER OPERATING UNIT FOR A MOTOR-VEHICLE GEARBOX**
HEBELBETÄTIGTE EINHEIT FÜR EIN KRAFTFAHRZEUGGETRIEBE
UNITÉ D ACTIONNEMENT À LEVIER POUR UNE BOÎTE DE VITESSES AUTOMOBILE

(30) Priority: 23.05.2008 IT TO20080387
(43) Date of publication of application: 23.03.2011
(73) Proprietor: Sila Holding Industriale S.p.A., 10042 Nichelino (Torino) (IT)
(72) Inventor: MOURAD, Kamal, I-10123 Torino (IT); MONGARLI, Edoardo, I-10088 Volpiano (Torino) (IT)
(74) Representative: Quinterno, Giuseppe
(86) International application number: PCT/IB2009/052148
(87) International publication number: WO 2009/141807

(56) References cited:
- DE-A1-102006 044 404
- DE-C1- 10 110 738
- US-A- 4 519 266
- US-A1- 2002 003 527
- US-A1- 2008 078 604

## Description

The present invention relates to an operating unit for a motor-vehicle gearbox.

More specifically, the subject of the invention is a lever operating unit of the kind defined in the preamble of claim 1.

A lever operating unit of that kind is disclosed in US-A-2008/0078604.

An object of the invention is to propose a lever operating unit which is improved in particular with regard to the detection of the position of the lever member.

This and other objects are achieved, according to the invention, by an operating unit for a gearbox with discrete gear ratios having the features defined in claim 1.

Further characteristics and advantages of the invention will become clear from the following detailed description which is given purely by way of non-limiting example with reference to the appended drawings, in which:
Figure 1 is a partial perspective view of a lever operating unit for a gearbox with discrete gear ratios, according to the present invention,
Figure 2 is a partial view sectioned on the line II-II of Figure 1, and
Figure 3 is a partial sectioned view similar to that of Figure 2 and shows a variant.

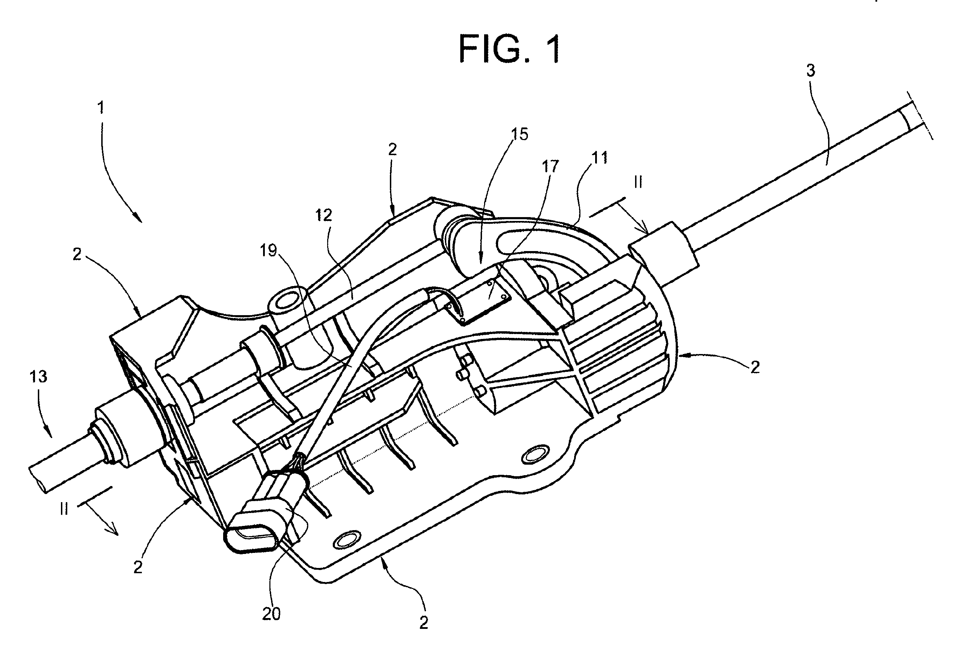

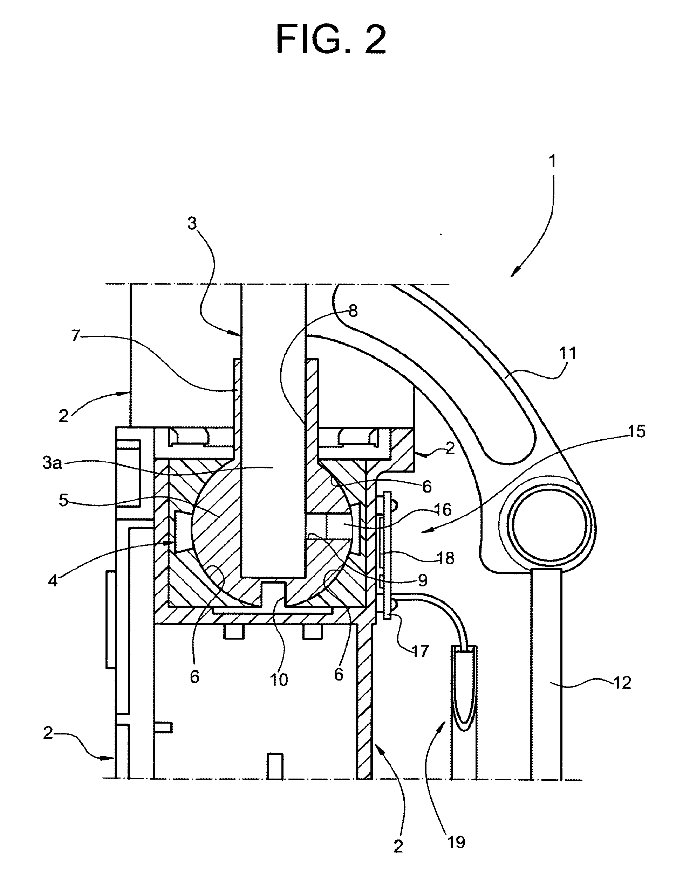

An operating unit according to the invention for a motor-vehicle gearbox with discrete gear ratios is generally indicated 1 in Figures 1 and 2.

In the embodiment shown by way of example in those drawings, the operating unit 1 comprises a support housing 2 which is made, for example, of moulded plastics material, and in which an operating lever or rod 3 is mounted pivotably by means of a ball-and-socket joint, generally indicated 4 in Figure 2.

The joint 4 comprises an at least partially spherical body or head 5 which is fixed firmly to the operating lever or rod 3 and is mounted movably in a seat 6 of at least partially complementary shape.

In the embodiment shown in Figure 2, the body or head 5 has a substantially radial appendage 7 in which there is a substantially cylindrical duct 8 which also extends through the body or head 5 in order to house therein an end 3a of the operating rod or lever 3.

As can be seen in Figure 2, at least one radial duct 9 is formed in the body or head 5, substantially transversely relative to the above-mentioned duct 8. Alternatively or in addition, a further radial duct 10 is formed in the body or head 5 and, in the embodiment shown, is substantially coaxial with the duct 8.

The operating lever or rod 3 can be pivoted manually, in known manner, by means of the ball-and-socket joint 4, 5, in at least a first plane and a second plane which are inclined at an angle to one another, for the selection and for the engagement, respectively, of a gear ratio. Moreover, and also in known manner, a substantially transverse arm 11 is connected to the operating rod or lever 3 and a flexible pulling element 12 such as the core of a pulling device 13 (Figure 1) of the so-called Bowden-cable type, is connected to the free end of the transverse arm 11 in order to bring about the movement to engage the gear selected.

To enable the instantaneous position of the operating rod or lever 3 to be detected in operation, a sensor device, generally indicated 15 in Figures 1 and 2, is associated with the end 3a thereof.

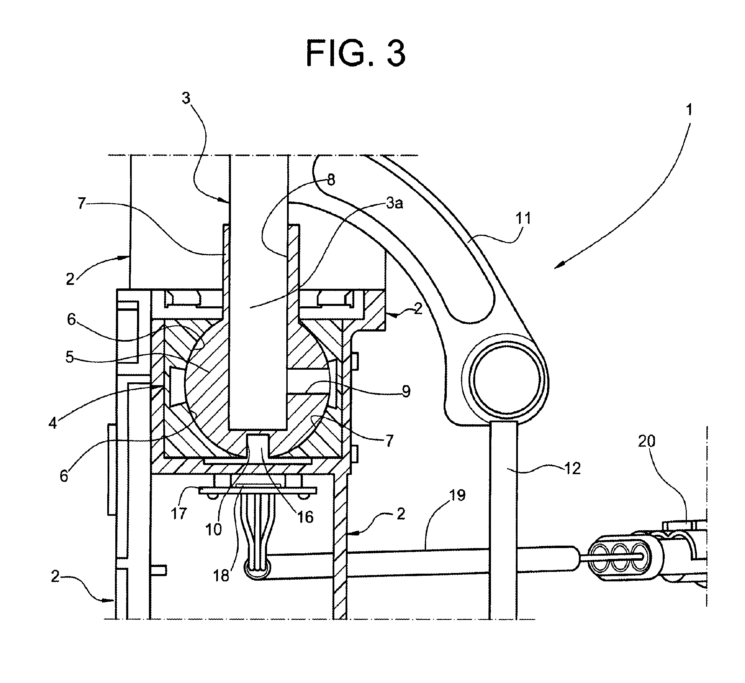

The device comprises a permanent magnet 16 mounted eccentrically in the body or head 5 of the joint 4. In the embodiment of Figures 1 and 2, the permanent magnet 16 is fixed in the transverse duct 9 of the body or head 5 of the joint whereas, in the variant of Figure 3, the magnet 16 is mounted in the duct indicated 10 therein.

The device or sensor 15 further comprises a circuit plate or board 17 bearing at least one monolithic Hall-effect magnetic field sensor 18 in the form of an integrated chip.

The sensor is, for example, a MLX90333 Triaxis (trade mark) device produced and marketed by Melexis Integrated Systems N.V.

In operation, the monolithic magnetic field sensor 18 can supply output signals indicative of the components (along three coordinated reference axes) of the magnetic flux which is applied to the sensor in operation.

In the embodiment of Figure 2, the circuit plate or board 17 with the sensor 18 is fixed externally to the support housing 2 of the operating unit 1 in a manner such that the chip of the sensor 18 extends, at least approximately, parallel to the axis of the operating rod or lever 3.

The circuit plate or board 17 may be fixed to the support housing 2 in one of the various known ways, for example, by screwing, gluing, riveting, hot upsetting, etc.

In addition to the monolithic sensor 18, the circuit board or plate 17 may carry further components such as a digital signal processor or DSP, to which the sensor 18 is connected by means of an analogue/digital converter also carried by the board or plate.

A cable 19, also connected to the circuit board or plate 17, terminates in a connector 20 (Figure 1) for connection to an external electronic processing unit, for example, an electronic control unit associated with the vehicle's gearbox.

In the alternative embodiment of Figure 3, the circuit plate 17 is fixed to the support housing 2 in a manner such that the integrated sensor 18 is operatively exposed to the magnetic flux emanating from the magnet 16 which, in this embodiment, is mounted in the duct 10 of the head 5 of the ball-and-socket joint.

The operating unit may advantageously be manufactured with provision for the two different ways of mounting the permanent magnet and the associated detection and position electronics which are illustrated in Figures 2 and 3, respectively, so as to offer two possible alternative solutions to the manufacturer of the gearbox with which the operating unit is to be operatively associated.

This solution is therefore particularly advantageous.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. An operating unit (1) for a motor-vehicle gearbox with discrete gear ratios, comprising:
a support housing (2) in which an operating lever (3) is mounted pivotably by means of a ball-and-socket joint (4-6), the joint (4-6) including an at least partially spherical body (5) which is fixed firmly to the lever (3) and is movable relative to a seat (6) of at least partially complementary shape which is fixed firmly to the housing (2), the lever (3) being pivotable at least in a first plane and in a second plane which are inclined at an angle to one another, for the selection and for the engagement, respectively, of a gear ratio, and
sensor means (15) which are suitable for supplying electrical signals indicative of the position of the lever (3), and which include a permanent magnet (16) mounted eccentrically in the body (5) and magnetic field sensor means (18) suitable for supplying output signals indicative of the components of the magnetic flux which is applied thereto in operation, the sensor means (18) being mounted on a plate or board (17) which is fixed to a stationary portion (2) of the operating unit (1) so as to be operatively exposed to the magnetic flux generated by the permanent magnet (16) in operation;
**characterized in that** the magnetic field sensor means comprise a monolithic Hall-effect sensor (18) in the form of a single integrated chip,
and **in that** in the support housing (2) there are provided a first mounting surface and a second mounting surface for the mounting of the plate or board (17), in which the chip of the sensor (18) extends at least approximately parallel and at least approximately perpendicular to the axis of the lever (3), respectively, and wherein a first duct (9) and a second duct (10) are correspondingly provided in the body (5) of the ball-and-socket joint (4) for the mounting of the permanent magnet (16).

2. An operating unit according to Claim 1 wherein the sensor (18) is connected to a digital signal processor (DSP) by means of an analogue/digital converter, both of which are preferably mounted on the plate or board (17).

3. An operating unit according to Claim 1 or Claim 2 wherein the plate or board (17) is fixed externally to the support housing (2) in the vicinity of the seat (6) of the ball-and-socket joint (4).

## Patentansprüche

1. Betriebseinheit (1) für ein Motorfahrzeuggetriebe mit diskretem Übersetzungsverhältnis, umfassend:
ein Trägergehäuse (2), in welchem ein Bedienhebel (3) schwenkbar mittels eines Kugelgelenks (4-6) montiert ist, wobei das Gelenk (4-6) einen zumindest teilweise kugeligen Körper (5) aufweist, der fest am Hebel (3) befestigt und in Bezug auf einen Sitz (6) mit einer zumindest teilweise komplementären Form beweglich ist, welcher fest am Gehäuse (2) befestigt ist, wobei der Hebel (3) zumindest in einer ersten Ebene und in einer zweiten Ebene, die in einem Winkel zueinander geneigt sind, schwenkbar ist, um ein Übersetzungsverhältnis zu wählen bzw. einzugreifen, und
Sensormittel (15), die zum Zuführen von elektrischen Signalen geeignet sind, die die Position des Hebels (3) anzeigen, und einen Permanentmagnet (16) umfassen, der exzentrisch im Körper (5) montiert ist, und Magnetfeld-Sensormittel (18), die dazu geeignet sind, Ausgabesignale bereitzustellen, die indikativ für die Komponenten des Magnetflusses sind, welcher im Betrieb darauf angelegt wird, wobei die Sensormittel (18) auf einer Platte oder einer Tafel (17) montiert sind, welche an einem stationären Abschnitt (2) der Betriebseinheit (1) befestigt ist, um somit operativ gegenüber dem durch den Permanentmagnet (16) im Betrieb erzeugten Magnetfluss ausgesetzt zu werden;
**dadurch gekennzeichnet, dass** die Sensormittel für das Magnetfeld einen monolithischen Hall-Effekt-Sensor (18) in der Form eines einzelnen integrierten Chips umfassen,
und dadurch, dass im Trägergehäuse (2) eine erste Montagefläche und eine zweite Montagefläche für die Montage der Platte oder der Tafel (17) vorgesehen sind, worin sich der Chip des Sensors (18) zumindest etwa parallel bzw. zumindest etwa orthogonal auf die Achse des Hebels (3) erstreckt, und worin ein erster Kanal (9) und ein zweiter Kanal (10) entsprechend im Körper (5) des Kugelgelenks (4) zur Montage des Permanentmagneten (16) bereitgestellt sind.

2. Betriebseinheit nach Anspruch 1, wobei der Sensor (18) mit einem digitalen Signalprocessor (DSP) mittels eines Analog-Digital-Wandlers verbunden ist, wobei beide dieser vorzugsweise auf der Platte oder der Tafel (17) montiert sind.

3. Betriebseinheit nach Anspruch 1 oder Anspruch 2, wobei die Platte oder die Tafel (17) extern am Trägergehäuse (2) in der Nähe des Sitzes (6) des Kugelgelenks (4) befestigt ist.

## Revendications

1. Unité d'actionnement (1) pour boîte de vitesses de véhicule à moteur à rapports de vitesse discrets, comprenant :
un boîtier de support (2) dans lequel un levier d'actionnement (3) est monté de façon pivotante au moyen d'une articulation à rotule (4-6), l'articulation (4-6) comprenant un corps au moins partiellement sphérique (5) qui est solidement fixé au levier (3) et qui est mobile par rapport à un siège (6) de forme au moins partiellement complémentaire qui est solidement fixé au boîtier (2), le levier (3) pouvant pivoter au moins dans un premier plan et dans un deuxième plan qui sont inclinés en formant un angle l'un par rapport à l'autre, respectivement pour la sélection et pour l'engagement d'un rapport de vitesse, et
des moyens formant capteur (15) qui sont adaptés pour fournir des signaux électriques indiquant la position du levier (3), et qui comprennent un aimant permanent (16) monté de façon excentrique dans le corps (5) et un moyen formant capteur de champ magnétique (18) adapté pour fournir des signaux de sortie indiquant les composantes du flux magnétique qui lui est appliqué pendant le fonctionnement, le moyen formant capteur (18) étant monté sur une plaque ou planche (17) qui est fixée sur une partie statique (2) de l'unité d'actionnement (1) de manière à être exposé fonctionnellement au flux magnétique généré par l'aimant permanent (16) pendant le fonctionnement ;
**caractérisé en ce que** le moyen formant capteur de champ magnétique comprend un capteur à effet Hall monolithique (18) sous la forme d'une puce intégrée simple,
et **en ce que** dans le boîtier de support (2) sont prévues une première surface de montage et une deuxième surface de montage pour le montage de la plaque ou planche (17), dans lequel la puce du capteur (18) s'étend respectivement au moins approximativement parallèlement et au moins approximativement perpendiculairement à l'axe du levier (3), et dans lequel un premier conduit (9) et un deuxième conduit (10) sont prévus de façon correspondante dans le corps (5) de l'articulation à rotule (4) pour le montage de l'aimant permanent (16).

2. Unité d'actionnement selon la revendication 1, dans laquelle le capteur (18) est connecté à un processeur de signaux numériques (DSP) au moyen d'un convertisseur analogique-numérique, qui sont de préférence tous deux montés sur la plaque ou planche (17).

3. Unité d'actionnement selon la revendication 1 ou 2, dans laquelle la plaque ou planche (17) est fixée extérieurement au boîtier de support (2) au voisinage du siège (6) de l'articulation à rotule (4).
